# DEMANDE DE BREVET EUROPEEN

(11) **EP 1 787 782 A1**
(43) Date de publication de la demande: **23.05.2007**
(21) Numéro de dépôt: 06123776.4
(22) Date de dépôt: 09.11.2006
(51) Int. Cl.: B29C 44/08, B29C 44/10

(54) **Procédé et dispositif d' expansion d' un appui de sécurité**

(30) Priorité: 22.11.2005 FR 0511927
(71) Demandeur: Société de Technologie Michelin, 63000 Clermont-Ferrand (FR); MICHELIN Recherche et Technique S.A., 1763 Granges-Paccot (CH)
(72) Inventeur: AZAM, Jean-Jacques, 63100 CLERMONT-FERRAND (FR)
(74) Mandataire: Dequire, Philippe Jean-Marie Denis

(57) **Abrégé**

Procédé et dispositif d'expansion d'un appui de sécurité par l'expansion d'au moins une ébauche d'un anneau torique (2) formé à partir d'un matériau élastomérique, comportant une étape de réticulation partielle, ledit anneau torique étant destiné à constituer, à l'état totalement réticulé et expansé au moins en partie un appui de sécurité de structure alvéolaire à cellules fermées, ledit appui étant destiné à être monté sur une jante de roue à l'intérieur d'une enveloppe de pneumatique, dans lequel, à l'issue de l'étape de réticulation partielle, l'anneau torique (2) est placé dans une étuve (1) pour y subir une phase d'expansion, caractérisé en ce que pendant la phase d'expansion, l'anneau torique (2) est entraîné en rotation dans un plan vertical par un axe rotatif horizontal (3) qui supporte ledit anneau torique le long de sa circonférence intérieure.

## Description

L'invention concerne les systèmes de roulage à plat destinés à équiper les véhicules automobiles. Ces systèmes comportent une jante dotée d'une valve, un pneumatique, et enferment un appui de sécurité de forme approximativement toroïdale, réalisés à base d'une mousse et ci après désignés par appui en mousse. Les appuis de sécurité de ce type peuvent être utilisés, à titre d'exemple, pour équiper des véhicules ou des engins destinés à rouler sur des parcours accidentés, et ont pour vocation de compenser les effets d'une perte de pression dans l'enveloppe et de permettre au véhicule de poursuivre sa route sur une distance déterminée.

La présente invention se rapporte aux appuis en mousse ayant une structure alvéolaire à cellules fermées. A titre d'exemple, on peut réaliser de tels appuis en mousse en élastomère diénique à base de caoutchouc butyl. Les alvéoles peuvent, dans certains cas, contenir un gaz sous pression.

Les étapes de fabrication de ces appuis comprennent généralement une première étape de travail thermo-mécanique du caoutchouc, au cours de laquelle on procède au malaxage de la composition de caoutchouc que l'on mélange avec des charges renforçantes telles que des noirs de carbone, avec des produits destinés à réaliser la réticulation et enfin avec des agents de gonflement permettant l'obtention ultérieure de la structure alvéolaire à cellules fermées.

Dans une seconde étape de façonnage on procède à la mise en forme de la composition de caoutchouc obtenue à l'étape précédente par extrusion d'une ébauche ou par injection directe dans un moule.

Une fois disposée dans le moule, l'ébauche est réticulée au moins partiellement au cours d'une troisième étape de cuisson à une température usuellement comprise entre 130°C et 160°C.

Enfin dans une quatrième étape, réalisée en étuve, on soumet l'ébauche démoulée à une expansion. L'étuve est à la pression atmosphérique et il y règne une température voisine de celle de la cuisson et comprise entre 130°C et 150°C.

C'est au cours de cette étape que les agents d'expansion se décomposent et provoquent la formation du système alvéolaire au sein de la structure du matériau.

Cette phase d'expansion se traduit également par une augmentation du volume de l'anneau torique dont la section autant que le diamètre sont multipliés d'un facteur 2 voire 3 pendant cette phase.

Dans ces conditions, la maîtrise des dimensions de l'anneau torique revêt une importance primordiale, d'autant que toute irrégularité de géométrie aura une influence sensible sur les performances de l'appui lors de son utilisation en pneumatique.

Une première solution consiste à réaliser cette phase d'expansion en moule ou directement à l'intérieur de la cavité du pneumatique destiné à recevoir le boudin mousse, comme cela est décrit à titre d'exemple dans le brevet FR 2 095 535. Ce procédé présente l'inconvénient de ne pas permettre une répartition homogène de la densité et de la taille des cellules dans une section du boudin mousse en raison du bridage dimensionnel imposé par le moule.

Une autre solution consiste à réaliser la phase d'activation des agents d'expansion dans des conditions de température et de pression contrôlées, tel que cela est exposé dans le brevet EP 1 155 801. A cet effet, le boudin mousse est disposé sur la surface d'un plateau sur lequel il est libre de faire varier son volume.

Il s'avère toutefois que ce procédé ne permet pas d'obtenir un anneau torique présentant, à l'état libre, une section parfaitement identique sur toute sa circonférence. De plus la reproductibilité des caractéristiques dimensionnelles d'un boudin mousse à un autre reste encore très en deçà des exigences de l'industrie automobile de masse.

Le procédé et le dispositif selon l'invention ont pour objet d'améliorer la maîtrise de l'évolution dimensionnelle du boudin mousse pendant l'étape d'expansion.

Il est en effet possible d'obtenir de bien meilleurs résultats en plaçant l'anneau torique obtenu immédiatement à l'issue de l'étape de cuisson telle que décrite ci-dessus, dans une étuve dans l'enceinte de laquelle circule un courant d'air permettant de réguler la température au niveau désiré, et dans laquelle l'anneau torique est entraîné en rotation dans un plan vertical par un axe rotatif horizontal qui supporte ledit anneau torique le long de sa circonférence intérieure.

Il s'avère en effet que cette disposition particulière du boudin mousse, pendant la phase d'expansion au sein de l'étuve, permet d'éviter les dissymétries géométriques et structurelles.

En effet, il a été observé que la cinétique de la réaction chimique des agents gonflants qui se déroule pendant ladite phase d'expansion est extrêmement sensible aux moindres variations de température. De ce fait, tous les éléments susceptibles d'introduire des perturbations infimes dans les flux d'échanges de chaleur entre l'anneau torique et le courrant d'air entraînent une perturbation de la réaction et des irrégularités de forme qu'il est difficile de combattre par la suite.

Il importe donc que chaque élément de matière d'une section donnée de l'anneau torique reçoive une quantité d'énergie thermique selon une distribution la plus constante et la plus symétrique possible.

En disposant l'anneau torique en cours d'expansion verticalement, on s'affranchit de l'influence d'un élément de support horizontal, tel qu'un plateau susceptible de perturber le flux thermique et d'introduire des hétérogénéités liées aux phénomènes de conduction thermique avec la face de l'anneau en contact avec ledit plateau. L'axe rotatif, qui ne vient en contact avec une section radiale donnée de l'anneau qu'une fois par tour, permet de neutraliser les effets des contraintes mécaniques liées aux effets de la gravité et du frottement, et des irrégularités d'échange thermique .

La mise en oeuvre de l'invention est illustrée sur les figures 1 à 3 dans lesquelles
- la figure 1 représente une vue schématique de face d'un anneau torique en début de la phase d'expansion,
- la figure 2 représente une vue schématique de face d'un anneau torique en fin de phase d'expansion,
- la figure 3 représente une vue schématique en coupe d'une étuve selon l'invention.

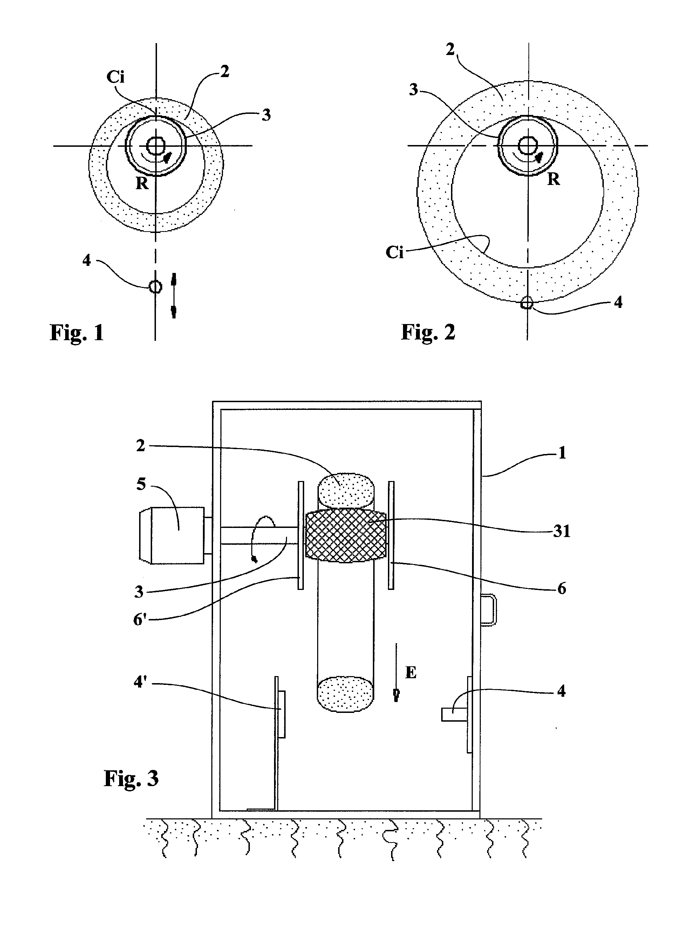

La figure 1 représente un anneau torique 2 destiné à former un appui de sécurité du type boudin mousse en début de phase d'expansion, c'est-à-dire juste après que ledit anneau 2 soit sortie du moule de vulcanisation. L'anneau torique est supporté par un axe rotatif 3, placé en position horizontale. Le contact entre l'anneau torique 2 et l'axe horizontal 3 se fait le long de la circonférence intérieure Ci de l'anneau torique 2.

L'anneau torique est entraîné en rotation dans le même sens R que celui de l'axe de rotatif 3. Pour une bonne efficacité des échanges thermiques, la vitesse de rotation de l'anneau torique est comprise entre 0,1 rad/sec et 2 rad/sec, considérant que la vitesse de rotation de l'anneau varie également en fonction de l'augmentation du diamètre à vitesse d'entraînement de l'axe rotatif constante. De préférence, cette vitesse de rotation est de l'ordre de 0,5 rad/sec.

La figure 2 représente l'anneau torique en fin de phase d'expansion. Du fait de son augmentation de diamètre, l'anneau torique occupe dorénavant le volume inférieur de l'étuve. Une cellule optique peut être disposée de manière à indiquer que l'anneau torique a atteint le diamètre désiré et qu'il est nécessaire d'extraire l'anneau de l'étuve.

La figure 3 représente une vue schématique en coupe d'une étuve 1 comportant un axe rotatif 3 entraîné par un moteur 5. La partie 31 de l'axe rotatif supportant l'anneau torique 2 a une forme bombée de manière à générer un effet d'auto centrage de l'anneau sur le rouleau. Pour améliorer l'effet d'entraînement, la surface bombée pourra comporter des moletages, ou des stries.

Il est possible également de disposer des flasques latérales 6, 6' de manière à éviter tout risque de chute de l'anneau en cours d'expansion. Ces flasques seront de préférence montées libres en rotation par rapport à l'axe rotatif 3.

La cellule optique 4 est montée en vis-à-vis d'un réflecteur 4' permettant de renvoyer le signal émis. Une alternative à cette forme de réalisation peut consister à disposer verticalement un ensemble de cellules les unes au dessus des autres, de manière à suivre dans le temps l'évolution de l'expansion dans la direction verticale matérialisée par la flèche E, et de corriger selon des lois spécifiques les paramètres d'une seconde partie de la phase d'expansion en fonction de la vitesse d'expansion mesurée pendant une première partie de la phase d'expansion.

La régulation de température au sein de l'étuve est assurée par la circulation d'un courrant d'air chaud (non visualisé) de manière à maintenir, comme cela a été dit, une température généralement comprise entre 120°C et 160°C et de préférence entre 140°C et 150°C. De manière à ce que cette circulation d'air chaud soit la moins génératrice d'irrégularités d'échanges thermiques, on s'assurera que la distribution des flux d'air dans l'étuve soit symétrique par rapport à un plan vertical perpendiculaire à l'axe rotatif 3. On s'arrange alors pour centrer la partie 31 supportant l'anneau torique 2 sur ce plan de symétrie.

La pression au sein de l'étuve est égale à la pression atmosphérique, mais il va de soi que cette disposition de l'anneau torique pendant la phase d'expansion peut être adaptée à toute autre forme de mise en oeuvre, en particulier lorsque cette phase d'expansion s'effectue sous pression.

## Revendications

1. Procédé d'expansion d'au moins une ébauche d'un anneau torique (2) formé à partir d'un matériau élastomérique, comportant une étape de réticulation partielle, ledit anneau torique étant destiné à constituer, à l'état totalement réticulé et expansé au moins en partie un appui de sécurité de structure alvéolaire à cellules fermées, ledit appui étant destiné à être monté sur une jante de roue à l'intérieur d'une enveloppe de pneumatique, dans lequel, à l'issue de l'étape de réticulation partielle, l'anneau torique (2) est placé dans une étuve (1) pour y subir une phase d'expansion,
**caractérisé en ce que** pendant la phase d'expansion, l'anneau torique (2) est entraîné en rotation dans un plan vertical par un axe rotatif horizontal (3) qui supporte ledit anneau torique le long de sa circonférence intérieure (Ci).

2. Procédé selon la revendication 1 dans lequel la température au sein de l'étuve (1) est comprise entre 130°C et 160°C.

3. Procédé selon la revendication 1 dans lequel la température au sein de l'étuve (1) est comprise entre 140°C et 150°C.

4. Procédé selon l'une des revendications 1 à 3 dans lequel l'étuve (1) est à la pression atmosphérique.

5. Procédé selon l'une des revendications 1 à 4 dans lequel la vitesse de rotation de l'anneau torique (2) pendant la phase d'expansion est comprise entre 0,1 et 2 rad/s.

6. Etuve d'expansion (1) destinée à l'expansion d'un anneau torique (2) formé à partir d'un matériau partiellement réticulé qui est destiné à constituer, à l'état totalement réticulé et expansé, au moins en partie un appui de sécurité de structure alvéolaire à cellules fermées,
**caractérisée en ce qu'**elle comprend un axe rotatif horizontal (3) destiné à supporter l'anneau torique (2) par sa circonférence intérieure (Ci), et des moyens pour entraîner en rotation ledit axe rotatif.

7. Etuve selon la revendication 6 dans laquelle il est prévu un système de circulation de l'air chaud apte à réguler la température au sein de l'étuve (1) à une température comprise entre 130°C et 160°C.

8. Etuve selon la revendication 7 dans laquelle l'axe rotatif horizontal (3) est disposé de manière à ce que le l'anneau torique (1) soit placé dans un plan de symétrie du flux thermique de l'étuve (1).

9. Etuve selon l'une des revendications 6 à 8 dans laquelle la partie (31) de l'axe rotatif (3) qui supporte l'anneau torique (2) a une forme bombée.

10. Etuve selon l'une des revendications 6 à 9, dans laquelle l'axe rotatif (3) est équipé de flasques latérales (6, 6') montées libres en rotation autour de l'axe rotatif de part et d'autre de la partie (31) destinée à supporter l'anneau torique pendant la phase d'expansion.

11. Etuve selon l'une des revendications 6 à 10, dans laquelle au moins une cellule optique (4, 4') permet de suivre l'évolution du niveau d'expansion de l'anneau torique.
